# EUROPEAN PATENT APPLICATION

(11) **EP 4 261 089 A1**
(43) Date of publication of application: **18.10.2023**
(21) Application number: 22167947.5
(22) Date of filing: 12.04.2022
(51) Int. Cl.: B60T 8/32, B60T 1/06

(54) **BRAKE SYSTEM FOR A RAIL VEHICLE**

(71) Applicant: Dellner Bubenzer AB, 781 70 Borlänge (SE)
(72) Inventor: PRIM, Viktor, 811 61 SANDVIKEN (SE)
(74) Representative: Brann AB

(57) **Abstract**

A rail vehicle (100) has a brake system with a brake unit (200) configured to receive a brake command (cmd_{B}) and in response thereto execute a brake action. The brake unit (200) contains a rotatable member (110) and first and second pressing members (211). The rotatable member (110) is mechanically linked to at least one wheel (105) of the rail vehicle (100). The first and second pressing members (211) are configured to move relative to the rotatable member (110) to execute the brake action. The brake unit (200) also contains a brake actuator (120) configured to produce an electric brake-force signal (BF) in response to the brake command (cmd_{B}), a gear assembly arranged to operate mechanically on the first and second pressing members (211) and an electric motor (230) configured to act on the gear assembly (220) in response to the electric brake-force signal (BF). The brake actuator (120), in turn, includes a processing unit (125) that is configured to produce the electric brake-force signal (BF) based on the brake command (cmd_{B}). Thus, the electric brake-force signal (BF) is efficiently protected from interfering electromagnetic radiation.

## Description

### TECHNICAL FIELD

The present invention relates generally to retardation of rail vehicles. Especially, the invention relates to a brake system for a rail vehicle according to the preamble of claim 1.

### BACKGROUND

In operation of an electrically powered rail vehicle, the onboard motors are typically engaged as generators to decelerate the rail vehicle. However, for efficiency and safety reasons, one cannot rely solely on this braking strategy. In particular, a brake function will always be needed to ensure emergency braking functionality and to keep the rail vehicle stationary after that it has been brought to a stop.

In many cases, the same brake units are used for different types of braking functionality, such as service braking, emergency braking and parking braking. Today's rail vehicle brakes characteristically use pneumatically regulated brakes. This is disadvantageous inter alia due to their slow and imprecise regulation, however also because the risk of leakages and resulting malfunction.

Recently, electrically controlled brakes have been presented as an alternative to pneumatically regulated brakes. Further, there are examples of designs employing a communication bus of the Controller-Area-Network (CAN) format for controlling the brakes.

For example, CN 201472369 U shows a communication device in a train braking system based on a CAN bus. The system contains a microprocessor, a level conversion circuit, an isolation circuit and a CAN bus transceiver which are electrically connected in sequence. A CAN controller is arranged in the microprocessor and exchanges data with the level conversion circuit; and the CAN bus transceiver is electrically connected with a resistor matched with the CAN bus. The CAN bus is adopted to fulfill the communication functions of the electronic brake control unit of all trains. This saves a large amount of hardwiring, simplifies wiring, improves the maintainability of the system, and reduces the cost. In addition, the communication device adopts the network communication mode of the CAN bus and also has good expandability. The exchanged amount of the information inside the braking system continuously increases along with the continuous improvement on the automation of train control; and the network communication is adopted to increase the amount of the transmitted information in the situation that no hardwiring is added. Therefore, the expandability of the system is ensured. The system may also be conveniently upgraded and improved.

WO 2014/059806 describes a method for controlling a CAN busbased drive-by-wire ABS braking system. The control method uses slip rate error and slip rate error change as a fuzzy input quantity. A voltage value of a system output motor is used as a fuzzy control output quantity, and decides in a fuzzy way an accurate control output quantity. The accurate control output quantity is converted into a target current value of the motor, and sends same to a PID controller by means of a CAN bus for controlling a braking actuator. On account of the variability of ABS system working conditions and the non-linearity of tires, the control method uses a fuzzy control method, which avoids the need for establishing a precise mathematical model for the controlled object. The control method has a fast response speed, small overshoot, and better robustness and flexibility than traditional control methods.

As apparent from the above, brake control over the CAN bus has many advantages. However, although the brake control unit is connected to the CAN bus, the brake control unit, in turn, typically controls the brake actuator executing the braking task via an I/O interface, or similar. This renders the signal path between the brake control unit and the brake actuator sensitive to electromagnetic interference. Consequently, the brake-actuator signal risks deteriorating before reaching the brake actuator and there is a risk that a brake command does not result in the intended brake action. Of course, this may have dramatic and highly undesirable effects, especially if the brake command concerns emergency braking.

### SUMMARY

The object of the present invention is therefore to improve the overall safety and offer a solution that solves the above problem by ensuring that any commanded brake actions are effectuated as intended.

According to the invention, the object is achieved by a brake system for a rail vehicle, which brake system contains a brake unit configured to receive a brake command, e.g. from a driver or an emergency functionality, and in response thereto execute a brake action. The brake unit, in turn, contains a brake actuator, a rotatable member, first and second pressing members, a gear assembly and an electric motor. The rotatable member is mechanically linked to at least one wheel of the rail vehicle, and the first and second pressing members are configured to move relative to the rotatable member to execute the brake action. The brake actuator is configured to produce an electric brake-force signal in response to the brake command. Specifically, the brake actuator contains a processing unit, which is configured to produce the electric brake-force signal based on the brake command. The gear assembly is arranged to operate mechanically on the first and second pressing members, and the electric motor is configured to act on the gear assembly in response to the electric brake-force signal.

The above brake system is advantageous because the processing unit in the brake actuator enables forwarding brake instructions to the brake actuator on a robust format, which is insusceptible to electromagnetic interference.

According to one embodiment of the invention, the brake system includes a first accelerometer configured to produce at least one vector signal representing an acceleration in at least one dimension of a railroad car in which the brake actuator is comprised. The at least one vector signal thus expresses the movement of the railroad car. Here, the processing unit is configured to produce the electric brake-force signal on the further basis of the at least one vector signal. Thereby, the brake action instructed by the brake command may be specifically adapted and fine-tuned to how the individual railroad car moves. This enables enhanced braking efficiency.

Preferably, the first accelerometer is included in the brake actuator. This namely minimizes the length of the signal path for the at least one vector signal, and thus also reduces the risk of signal deterioration.

According to another embodiment of the invention, the processing unit is configured to produce the electric brake-force signal on the further basis of a first speed signal representing a rotational speed of the at least one wheel. Analogous to the at least one vector signal, this enables fine tuning of the brake command to the movement of the individual railroad. Hence, the first speed signal is an alternative or a supplement to the at least one vector signal to enhance the braking efficiency.

According to yet another embodiment of the invention, the brake system includes a rotational speed sensor configured to produce the first speed signal. Alternatively, the first speed signal may be received from a component external to the brake system, which component for example also provides the first speed signal to one or more other units in the rail vehicle. It is generally advantageous to produce the first speed signal physically close to the brake actuator, since such a location reduces the risk of the first speed signal being deteriorated by interference on its path from the rotational speed sensor to the brake actuator.

According to still another embodiment of the invention, the rotational speed sensor, in turn, contains a second accelerometer that is eccentrically arranged relative to a rotation axis of the at least one wheel. Here, the second accelerometer is configured to forward a set of acceleration parameters to the processing unit, which set of acceleration parameters express movements of the second accelerometer in a plane orthogonal to the rotation axis of the at least one wheel. The processing unit, in turn, is configured to produce the first speed signal based on said set of acceleration parameters. This design is advantageous because it renders determining whether wheel locking occurs comparatively straightforward by comparing acceleration parameters registered by the second accelerometer with acceleration parameters registered by at least one linearly moving accelerometer.

According to another embodiment of the invention, the processing unit is configured to produce the electric brake-force signal on the further basis of at least one second speed signal representing a rotational speed of at least one additional wheel of the rail vehicle different from the at least one wheel, for example on the same bogie, on a different bogie but on the same railroad car and/or on a different railroad car. Thereby, brake actions performed in two or more railroad cars can be coordinated, so that if for example a first railroad car must reduce its brake force due to a wheel lock, a second railroad car can compensate for this by increasing its brake force.

According to still another embodiment of the invention, the processing unit is configured to produce the electric brake-force signal on the further basis of a force signal reflecting the magnitude of a force applied by the first and second pressing members on the rotatable member. Hence, the electric brake-force signal may be dynamically adjusted during braking, for example to attain an improved braking efficiency.

The force signal may for instance be produced by a load-cell sensor in the gear assembly. Alternatively, or additionally, the processing unit may be configured to produce the electric brake-force signal on the further basis of a position signal expressing a position interrelationship between the first and second pressing members. This expands the potential base for dynamic adaptation of the electric brake-force signal during braking.

The position signal may be produced by a position sensor in a drivetrain arrangement interconnecting the electric motor and the gear assembly. Alternatively, or additionally, at least one of the first and second pressing members may contain at least one ultrasonic sensor configured to emit ultrasound energy and produce at least one ranging signal based on reflections of the emitted ultrasound energy against the rotatable member. Here, the position sensor is configured to produce the position signal based on the at least one ranging signal.

According to yet another embodiment of the invention, the brake command is represented by an analog signal, for instance in the form of an electric current whose magnitude designates the brake force to be applied.

Alternatively, the brake system may contain a communication bus configured to forward the brake command to the brake actuator, for instance in the form of a digital message. This is advantageous because control via a communication bus reduces the amount of cabling in the rail vehicle. It is also straightforward to send a confirmation message on the communication bus from the brake actuator after having executed the brake action. For example, thereby, a driver of the train may be notified of whether or not the braking is successfully performed. The communication bus is preferably implemented with a non-hierarchical communication structure, for instance on the Controller-Area-Network (CAN) format.

According to a further embodiment of the invention, the gear assembly and the electric motor are arranged to execute the brake action such that the first and second pressing members either move towards the rotatable member or away from the rotatable member depending on a state of the brake command. In other words, after having applied a brake force to the rotatable member, the first and second pressing members may be actively removed to release the brake. This, in turn, is advantageous if for some reason the brake has locked, e.g. due to ice and/or snow.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: schematically illustrates a rail vehicle equipped with a brake system according to one embodiment of the invention;
- Figure 2: shows a brake unit according to one embodiment of the invention;
- Figure 3: shows an accelerometer for registering railroad car movements according to one embodiment of the invention; and
- Figure 4: shows a schematic top view of a pair of pressing members and a rotatable member according to one embodiment of the invention.

### DETAILED DESCRIPTION

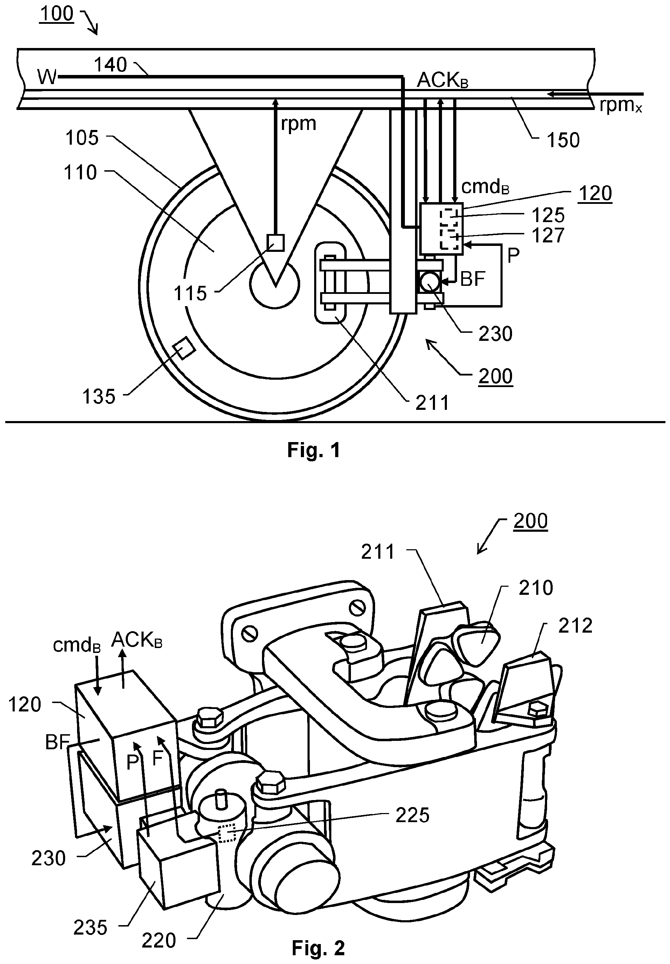

Figure 1 schematically illustrates a rail vehicle 100 equipped with a brake system according to one embodiment of the invention. In Figure 2, we see a brake unit 200 according to one embodiment of the invention.

The brake unit 200 is configured to receive a brake command cmd_{B}, for instance from a driver's cabin or an automatic emergency function, and response thereto execute a brake action. The brake unit 200 contains a rotatable member 110, first and second pressing members 211 and 212 respectively, a brake actuator 120, a gear assembly 220, and an electric motor 230. Preferably, the brake unit 200 is powered by electricity W received via a power line 140 in the railroad vehicle 100.

The rotatable member 110, which may be represented by a brake disc or a brake drum is mechanically linked to at least one wheel 105 of the rail vehicle 100.

Each of the first and second pressing members 211 and 212 is configured to move relative to the rotatable member 110 to execute the brake action. Typically, the brake action involves applying a particular brake force on the rotatable member 110. However, the brake action may also involve reducing or releasing an already applied brake force.

According to one embodiment of the invention, the gear assembly 220 and the electric motor 230 are arranged to execute the brake action so that the first and second pressing members 211 and 212 move away from the rotatable member 110 if a state of the brake command cmd_{B} indicates such a brake action, i.e. wherein the brake force is reduced or eliminated.

The brake actuator 120 is configured to produce an electric brake-force signal BF in response to the brake command cmd_{B}. The brake actuator 120 contains a processing unit 125, which is configured to produce the electric brake-force signal BF based on the brake command cmd_{B}.

According to one embodiment of the invention, the brake command cmd_{B} is represented by an analog signal, for instance in the form of an electric current. In such a case, a magnitude of the electric current preferably designates a brake force to be applied on the rotatable member 110. Further, the brake actuator 120 preferably contains an A/D converter configured to convert the magnitude of the electric current into a digital value, which, in turn, may serve as a basis for the processing unit 125 to produce the electric brake-force signal BF.

According to another embodiment of the invention, the brake system contains a communication bus 150 configured to forward the brake command cmd_{B} to the brake actuator 120, for example as a digital message. Here, the processing unit 125 may be configured to produce the electric brake-force signal BF directly based on the brake command cmd_{B}. Moreover, it is advantageous if the processing unit 125 in the brake actuator 120 is configured to send a confirmation message ACK_{B} on the communication bus 150 after having executed the brake action. Namely, this renders it possible for a driver of the rail vehicle to be notified whether or not the brake action was successful, which, of course, is highly important information.

As is common practice in the vehicular industry, the communication bus 150 is preferably configured to implement a non-hierarchical communication structure. Thus, the communication bus 150 may for example be configured to exchange data and control signals on the Controller-Area-Network (CAN) format.

The gear assembly 220 is arranged to operate mechanically on the first and second pressing members 211 and 212, and the electric motor 230 is configured to act on the gear assembly 220 in response to the electric brake-force signal BF, so that a desired brake force is applied on the rotatable member 110. This may involve increasing the brake force, reducing the brake force, or releasing the brake force completely.

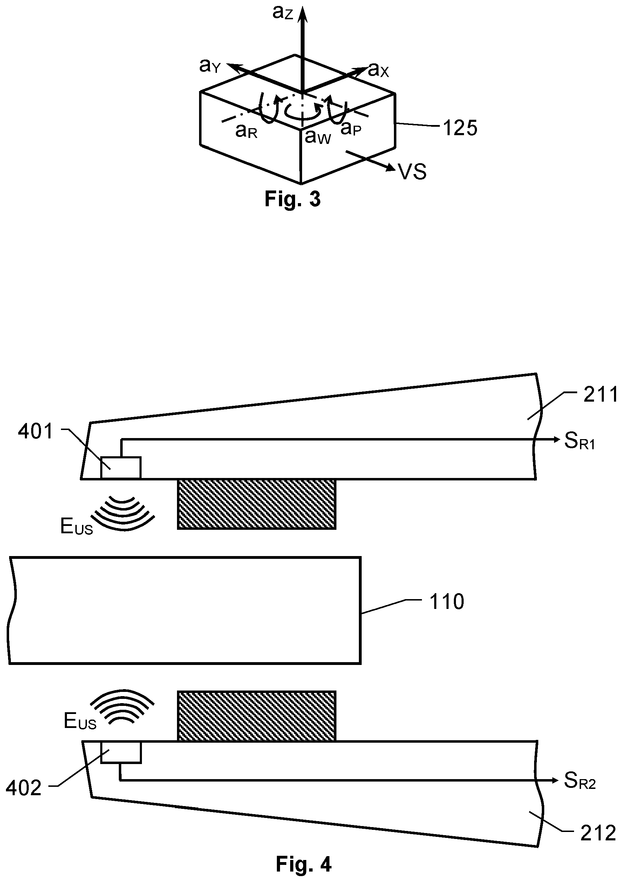

Figure 3 shows a first accelerometer 125, which, according to one embodiment of the invention is included in the same railroad car as the brake unit 200, and which first accelerometer 125 is configured to register movements of said railroad car. The first accelerometer 125 is configured to produce at least one vector signal VS representing an acceleration a_{X}, a_{Y}, a_{Z}, a_{R}, a_{P}, and/or a_{W} in at least one dimension of the railroad car. Thus, the at least one vector signal VS may express linear movements in one or more spatial dimensions and/or rotational movements around one or more axes. The processing unit 125 is configured to receive the at least one vector signal VS and produce the electric brake-force signal BF on the further basis of the at least one vector signal VS. Thereby, it is possible to fine-tune the brake action instructed by brake command cmd_{B} in relation to how the railroad car moves. This, in turn, is beneficial since it enables enhanced braking efficiency.

Figure 1 exemplifies an implementation where the first accelerometer 125 is included in the brake actuator 120. This is advantageous because such a location of the first accelerometer 125 minimizes the length of the signal path for the at least one vector signal VS, and thus reduces the risk that the at least one vector signal VS deteriorates due to interference, for example from radiating electromagnetic energy.

According to one embodiment of the invention, the processing unit 125 is configured to produce the electric brake-force signal BF on the further basis of a first speed signal rpm representing a rotational speed of the at least one wheel 105. The first speed signal rpm may originate from a rotational speed sensor 115 in the form of a tachometer arranged on and/or near a wheel axle for the at least one wheel 105. In such a case, the first speed signal rpm may be fed to the processing unit 125 in the brake actuator 120 over the communication bus 150.

Additionally, or alternatively, the rotational speed sensor may be implemented by a second accelerometer 135, which is eccentrically arranged relative to a rotation axis of the at least one wheel 105. The second accelerometer 135 is configured to register a set of acceleration parameters expressing movements of the second accelerometer 135 in a plane orthogonal to the rotation axis and forward the set of acceleration parameters to the processing unit 125 wirelessly, e.g. by radio. The processing unit 125 is configured to produce the first speed signal rpm based on the set of acceleration parameters, for example by analyzing these parameters in relation to parameters from the first accelerometer 125 expressing linear movements of the railroad car carrying the first accelerometer 125.

Producing the electric brake-force signal BF on the further basis of a first speed signal rpm is advantageous because this enables dynamic fine-tuning of the brake force in relation to an actual rotation of the railroad car's wheels. The fine-tuning may be further improved if also the wheel speeds of other wheels are considered, which other wheels are mounted on the same railroad car as the at least one wheel 105, or on other railroad cars in the rail vehicle 100, which other railroad cars, in turn, are directly or indirectly linked mechanically to the railroad car. Therefore, according to one embodiment of the invention, the processing unit 125 is configured to receive at least one second speed signal rpmₓ representing a rotational speed of at least one additional wheel of the rail vehicle 100, which at least one additional wheel is different from the at least one wheel 105; and produce the electric brake-force signal BF on the further basis of the at least one second speed signal rpmₓ. The at least one second speed signal rpmₓ may describe the rotational speed of one or more wheels on the same bogie as the at least one wheel 105, on a different bogie but on the same railroad car and/or on a different railroad car. The at least one second speed signal rpmₓ may be received via the communication bus 150. Specifically, this strategy renders it possible to detect wheel locking of individual wheels, and to compensate for this by reducing the brake force on the rotatable members 110 linked to any wheels that are locked while increasing the brake force on the rotatable members 110 linked to the wheels that are not locked.

According to one embodiment of the invention, additionally or as an alternative to the above, the processing unit 125 is configured to receive a force signal F reflecting the magnitude of a force applied by the first and second pressing members 211 and 212 on the rotatable member 110. The gear assembly 220 may contain a load-cell sensor, here symbolically illustrated as 225, which is configured to produce the force signal F. The processing unit 125 is configured to produce the electric brake-force signal BF on the further basis of a force signal F. Thereby, it is possible to adjust the brake force dynamically during the braking process. This is advantageous since it facilitates efficient and yet smooth braking.

Typically, there is an unambiguous relationship between the positioning of the first and second pressing members 211 and 212 relative to the rotatable member 110 and the force applied by the first and second pressing members 211 and 212 on the rotatable member 110. Consequently, the position interrelationship between the first and second pressing members 211 and 212 may be used as an alternative to the force signal F. According to one embodiment of the invention, the processing unit 125 is configured to produce the electric brake-force signal BF on the further basis of a position signal P expressing said position interrelationship.

The position signal P, in turn, may be produced by a position sensor in a drivetrain arrangement 235 interconnecting the electric motor 230 and the gear assembly 220. For example, if the electric motor 230 is a stepper motor, the position signal P may be directly derived from a pulse signal generated by the motor itself, where the pulse signal reflects a rotation angle of a drive shaft from the motor.

Referring now to Figure 4, additionally, or alternatively, at least one of the first and second pressing members 211 and 212 may contain at least one ultrasonic sensor 401 and 402 respectively, which is configured to emit ultrasound energy Eus towards the rotatable member 110. In such a case, the ultrasonic sensors 401 and 402 are further configured to produce a respective ranging signal S_{R1} and S_{R2} based on reflections of the emitted ultrasound energy Eus against the rotatable member 110, and the position sensor is configured to determine the position signal P based on the at least one ranging signal S_{R1} and S_{R2} respectively.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, but may be varied freely within the scope of the claims.

## Claims

1. A brake system for a rail vehicle (100), which brake system comprises a brake unit (200) configured to receive a brake command (cmd_{B}) and response thereto execute a brake action, the brake unit (200) comprising:
a rotatable member (110) being mechanically linked to at least one wheel (105) of the rail vehicle (100),
first and second pressing members (211, 212) configured to move relative to the rotatable member (110) to execute the brake action,
a brake actuator (120) configured to produce an electric brake-force signal (BF) in response to the brake command (cmd_{B}),
a gear assembly (220) arranged to operate mechanically on the first and second pressing members (211; 212), and
an electric motor (230) configured to act on the gear assembly (220) in response to the electric brake-force signal (BF),
**characterized in that**
the brake actuator (120) comprises a processing unit (125) configured to produce the electric brake-force signal (BF) based on the brake command (cmd_{B}).

2. The brake system according to claim 1, further comprising a first accelerometer (125) configured to produce at least one vector signal (VS) representing an acceleration (a_{X}, a_{Y}, a_{Z}, a_{R}, a_{P}, aw) in at least one dimension of a railroad car in which the brake actuator (120) is comprised, which at least one vector signal (VS) expresses movement of said railroad car, and the processing unit (125) is configured to produce the electric brake-force signal (BF) on the further basis of the at least one vector signal (VS).

3. The brake system according to claims 1 or 2, wherein the brake actuator (120) comprises the first accelerometer (125).

4. The brake system according to any one of the preceding claims, wherein the processing unit (125) is configured to produce the electric brake-force signal (BF) on the further basis of a first speed signal (rpm) representing a rotational speed of the at least one wheel (105).

5. The brake system according to claim 4, further comprising a rotational speed sensor (115, 135) configured to produce the first speed signal (rpm).

6. The brake system according to claim 5, wherein the rotational speed sensor comprises a second accelerometer (135) eccentrically arranged relative to a rotation axis of the at least one wheel (105), and the processing unit (125) is configured to produce the first speed signal (rpm) based on a set of acceleration parameters expressing movements of the second accelerometer (135) in a plane orthogonal to the rotation axis.

7. The brake system according to any one of the claims 4 to 6, wherein the processing unit (125) is configured to produce the electric brake-force signal (BF) on the further basis of at least one second speed signal (rpmₓ) representing a rotational speed of at least one additional wheel of the rail vehicle (100), which at least one additional wheel is different from the at least one wheel (105).

8. The brake system according to any one of the preceding claims, wherein the processing unit (125) is configured to produce the electric brake-force signal (BF) on the further basis of a force signal (F) reflecting the magnitude of a force applied by the first and second pressing members (211; 212) on the rotatable member (110).

9. The brake system according to claim 8, wherein the gear assembly (220) comprises a load-cell sensor (225) configured to produce the force signal (F).

10. The brake system according to any one of the preceding claims, wherein the processing unit (125) is configured to produce the electric brake-force signal (BF) on the further basis of a position signal (P) expressing a position interrelationship between the first and second pressing members (211; 212).

11. The brake system according to claim 10, comprising a drivetrain arrangement (235) interconnecting the electric motor (230) and the gear assembly (220), which drivetrain arrangement (235) comprises a position sensor configured to produce the position signal (P).

12. The braking system according to claim 11, wherein:
at least one of the first and second pressing members (211; 212) comprises at least one ultrasonic sensor (401, 402) configured to emit ultrasound energy (Eus) and produce at least one ranging signal (S_{R1}, S_{R2}) based on reflections of the emitted ultrasound energy (Eus) against the rotatable member (110); and
the position sensor is configured to produce the position signal (P) based on the at least one ranging signal (SR1, SR2).

13. The brake system according to any one of the preceding claims, wherein the brake command (cmd_{B}) is represented by an analog signal.

14. The brake system according to any one of the claims 1 to 12, comprising a communication bus (150) configured to forward the brake command (cmd_{B}) to the brake actuator (120).

15. The brake system according to claim 14, wherein the brake actuator (120) is configured to send a confirmation message (ACK_{B}) on the communication bus (150) after having executed the brake action.

16. The brake system according to any one of the claims 14 or 15, wherein the communication bus (150) is configured to implement a non-hierarchical communication structure.

17. The brake system according to claim 16, wherein the communication bus (150) is configured to exchange data and control signals on the Controller-Area-Network format.

18. The brake system according to any one of the preceding claims, wherein the gear assembly (220) and the electric motor (230) are arranged to execute the brake action such that the first and second pressing members (211; 212) either move towards the rotatable member (110) or away from the rotatable member (110) depending on a state of the brake command (cmd_{B}).
